# EUROPEAN PATENT APPLICATION

(11) **EP 2 472 901 A1**
(43) Date of publication of application: **04.07.2012**
(21) Application number: 10818287.4
(22) Date of filing: 17.05.2010
(51) Int. Cl.: H04Q 3/00

(54) **METHOD, INTELLIGENT NETWORK AND INTELLIGENT GATEWAY DEVICE FOR TRIGGERING MULTI-SERVICE**

(30) Priority: 27.09.2009 CN 200910093695
(71) Applicant: ZTE Corporation, Shenzhen, Guangdong 518057 (CN)
(72) Inventor: HAN, Yinjun, Shenzhen Guangdong 518057 (CN); ZHANG, Guobing, Shenzhen Guangdong 518057 (CN); QU, Xichun, Shenzhen Guangdong 518057 (CN); SHU, Chang, Shenzhen Guangdong 518057 (CN); WU, Yuning, Shenzhen Guangdong 518057 (CN)
(74) Representative: Anderson, Angela Mary
(86) International application number: PCT/CN2010/072851
(87) International publication number: WO 2011/035593

(57) **Abstract**

The present invention provides a method for triggering multi-services which is applied in an intelligent network, the intelligent network comprising at least one mobile switching center, an intelligent gateway, and a plurality of service control points, wherein the mobile switching center is connected to the service control points by the intelligent gateway, and the intelligent network gateway subscribes to services in the plurality of service control points, and the method comprises: the intelligent gateway receiving a triggering message for triggering services from the mobile switching center; and the intelligent gateway sending the triggering message to a service control point corresponding to the triggering message, and triggering a service logic of the service control point via the triggering message. Accordingly, the present invention further provides an intelligent network and intelligent gateway device. The present invention solves the drawback that the service logic of the original SCP must be modified when a new SCP service is added to the existing network, thereby maintaining greatly system stability and enriching user experience.

## Description

### Technical Field

The present invention relates to the field of communication technology, and more particularly, to a method for triggering multi-services, an intelligent network and intelligent gateway device.

### Background of the Related Art

Intelligent Network is a network system able to conveniently and flexibly provide users with a variety of new intelligent communication services and handle these services. The intelligent network technology achieves service control by adding new Service Control Points (SCPs) to the original switching network, and its core is to separate the service control from call control. For example, the Global System for Mobile Communications (GSM) Intelligent Network is developed on the basis of the existing telephone network.

In the existing intelligent network architecture, one user can possess only one service key at one time, which limits the possibility of the user subscribing to multiple services at the same time. If multiple services are required to be implemented at present, multiple service logics must be implemented in a service, which greatly limits the development of intelligent network services.

With the mature development of the existing network intelligent services, if new functions are required to be added to the existing SCP services, the original service logic has to be improved, resulting in that operators need to defray expensive service maintenance costs for the original services, while affecting the stability of the SCP services in the existing network.

### Content of the Invention

In order to solve the aforementioned problem, an object of the present invention is to provide a method for triggering multi-services, an intelligent network and an intelligent gateway device so as to add a new SCP service to the intelligent network without affecting the existing network services, to solve the drawback that a service logic of the original SCP must be modified when the new SCP service is added to the existing network.

In order to achieve the aforementioned object, the present invention provides a method for triggering multi-services which is applied in an intelligent network, the intelligent network comprising at least one mobile switching center, an intelligent gateway, and a plurality of service control points, wherein the mobile switching center is connected to the service control points by the intelligent gateway, and the intelligent network gateway subscribes to services in the plurality of service control points, and the method comprises:
the intelligent gateway receiving a triggering message for triggering services from the mobile switching center; and
the intelligent gateway sending the triggering message to a service control point corresponding to the triggering message, and triggering a service logic of the service control point via the triggering message.

Preferably, after the step of the intelligent gateway sending the triggering message to the service control point corresponding to the triggering message, the method further comprises:
the intelligent gateway determining whether the other service control points are required to be triggered based on service configuration information, and if yes, sending the triggering message to the other service control points.

Preferably, after the step of the intelligent gateway sending the triggering message to the service control point corresponding to the triggering message, the method further comprises:
the service control point returning a response message to the intelligent gateway;
the intelligent gateway sending the response message returned by the service control point to the mobile switching center, and receiving an event report from the mobile switching center; and
the intelligent gateway sending the event report received from the mobile switching center to the service control point.

Preferably, before the step of the intelligent gateway sending the triggering message to the service control point corresponding to the triggering message, the method further comprises:
the intelligent gateway determining whether number information in the triggering message is required to be modified based on the service configuration information, and if yes, modifying the number information in the triggering message.

Preferably, the service configuration information includes a service trigger list and number change regulation.

The present invention also provides an intelligent network comprising at least one mobile switching center, at least one intelligent gateway device, and a plurality of service control points, wherein the mobile switching center is connected to the service control points by the intelligent gateway, and the intelligent gateway subscribes to services in the plurality of service control points.

The intelligent gateway device comprises:
a receiving module configured to receive a triggering message for triggering services from the mobile switching center; and
a transmission module configured to send the triggering message to a service control point corresponding to the triggering message, and trigger a service logic of the service control point via the triggering message.

Preferably, the intelligent gateway device also comprises:
a determining module configured to determine whether the other service control points are required to be triggered based on service configuration information, and if yes, send the triggering message to the other service control points; and
an event reporting module configured to send an event report received from the mobile switching center to the service control point.

The present invention also provides an intelligent gateway device comprising:
a receiving module configured to receive a triggering message for triggering services from a mobile switching center; and
a transmission module configured to send the triggering message to a service control point corresponding to the triggering message, and trigger a service logic of the service control point via the triggering message.

Preferably, the intelligent gateway device also comprises:
a determining module configured to determine whether there are other service control points required to be triggered based on service configuration information, and if yes, trigger the transmission module to send the triggering message to the other service control points.

Preferably, the intelligent gateway device also comprises:
an event reporting module configured to send an event report received from the mobile switching center to the service control point.

At least one of the technical schemes described above has the following beneficial effects: first the triggering message for triggering services is received from the MSC (Mobile Switching Center) through the intelligent gateway device, and then the triggering message is sent to the SCP corresponding to the triggering message to trigger the service logic of the SCP via the triggering message so as to resolve the drawback that the service logic of the original SCP must be modified when a new SCP service is added to the existing network. For example, after the user subscribes to an intelligent gateway device in a HLR (Home Location Register), he can subscribes to multiple SCP services at the same time in the intelligent gateway device without modifying the service logic of the original SCP, and it is sufficient to newly add corresponding SCP service functions, thereby maintaining greatly the system stability and enriching the user experience.

### Brief Description of Drawings

FIG.1 is a flow chart of a method for triggering intelligent network services in accordance with an embodiment of the present invention;
FIG. 2 is a flow chart of a procedure for processing a message in accordance with an embodiment of the present invention;
FIG. 3 is a structural diagram of an intelligent network in accordance with an embodiment of the present invention; and
FIG. 4 is a block diagram of an intelligent gateway device in accordance with an embodiment of the present invention.

### Preferred Embodiments of the Present Invention

In order for objects, technical schemes and advantages of embodiments of the present invention to be understood more clearly, the embodiments of the present invention will be further described in detail in conjunction with the accompanying drawings and specific embodiments. Herein, the exemplary embodiments and relevant description of the present invention are intended to explain the present invention not to limit the present invention.

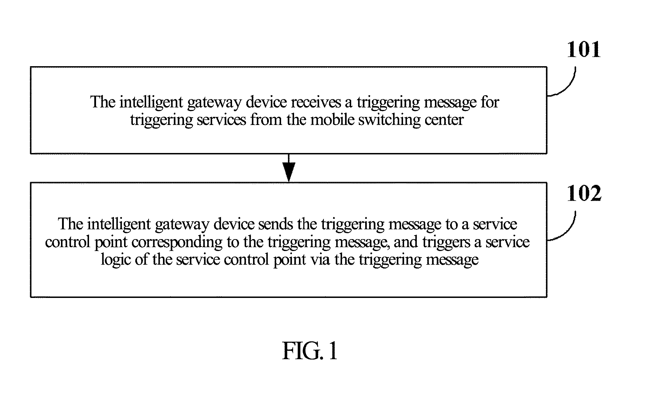

As shown in FIG. 1, a flow chart of a method for triggering intelligent network services in accordance with an embodiment of the present invention is provided. The method can be applied in an intelligent network that comprises at least one mobile switching center (MSC), at least one intelligent gateway device and a plurality of SCPs, wherein the MSC is connected to the SCPs through the intelligent gateway device. The specific steps of the method are as follows.

In step 101, the intelligent gateway device receives a triggering message for triggering services from the mobile switching center.

In this embodiment, the intelligent gateway device is between the MSC and the SCPs. At this point, on the one hand, for the MSC side, the intelligent gateway device might be understood as a SCP; and on the other hand, for the SCP side, the intelligent gateway device might be understood as a MSC or a Service Switching Point (SSP). After the user subscribes to an intelligent gateway device in a home location register (HLR), he can subscribe to multiple SCP services in the intelligent gateway device at the same time without modifying the original service logic.

In step 102, the intelligent gateway device sends the triggering message to a service control point corresponding to the triggering message, and triggers a service logic of the service control point via the triggering message.

When steps 101 and 102 are performed, after the intelligent gateway device receives an initial detection point (InitialDP) message for triggering services from the MSC, it determines whether number information in the InitialDP message is required to be modified based on relevant service configuration information, and if yes, sends the InitialDP message to the other SCPs according to the modified number information, that is, triggers other SCP services; otherwise, directly sends this InitialDP message to the other SCPs, that is, triggers the other SCP services. It is determined whether the other SCP services are required to be triggered based on the service configuration information, and if yes, the InitialDP message might be sent to the other SCPs such that the same user can trigger multiple services at the same time. For example, in an intelligent network comprising SCP1 and SCP2, after the intelligent gateway device receives Request Report BCSM Event (RRBE), Apply Charging (AC), Connect or Continue information from SCP1, it is determined whether the other SCP services are required to continue to be triggered based on the service configuration information, and if yes, the InitialDP message might be sent to SCP2. The aforementioned service configuration information includes a service trigger list and number change regulation.

Likewise, after the RRBE, AC, Connect or Continue information are received from SCP2, it might be determined whether the other SCP services are required to continue to be trigged. If at this point the other services are not required to continue to be triggered, the RRBE, AC, Connect or Continue information can be returned to the MSC according to messages returned by all the other SCPs. Meanwhile, if the other SCPs have call monitoring information for the intelligent network, then the intelligent network sends event status report information to the corresponding SCPs after receiving an event report from the MSC.

It can be seen from the technical scheme described above that first the triggering message for triggering services is received from the MSC through the intelligent gateway device, and then the triggering message is sent to the SCP corresponding to the triggering message to trigger the service logic of the SCP via the triggering message so as to resolve the drawback that the service logic of the original SCP must be modified when a new SCP service is added to the existing network.

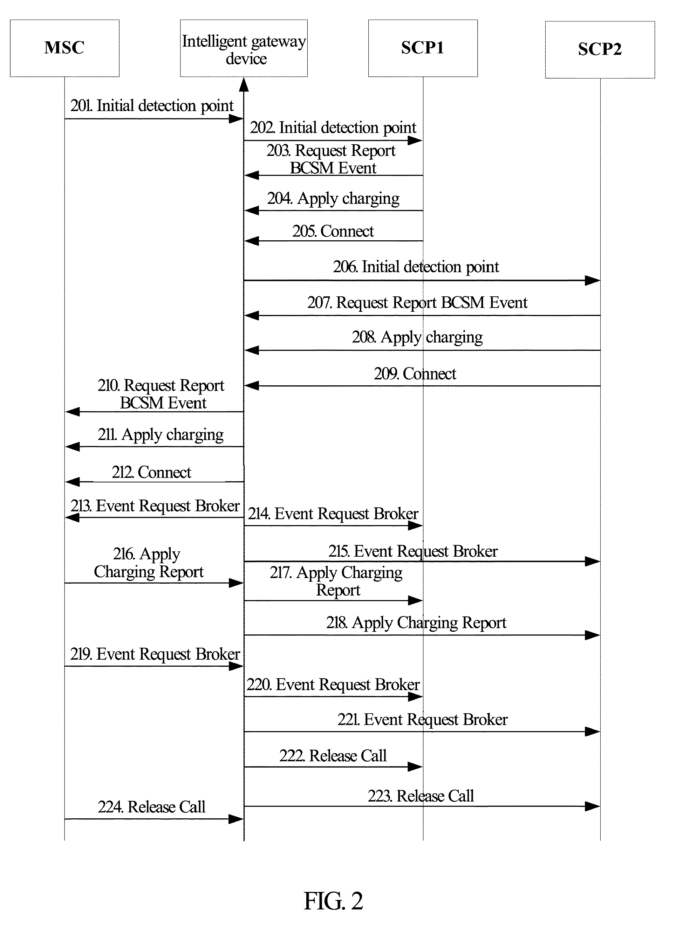

The procedure of the present invention will be described in detail below in conjunction with specific embodiments. As shown in FIG. 2, a flow chart of a procedure for processing a message in accordance with an embodiment of the present invention is provided. The specific steps of the procedure are as follows.

In step 201, a mobile switching center (MSC) sends an InitialDP (initial detection point) message to an intelligent gateway device, and initiates a service trigger to the intelligent gateway device according to a user's subscription information.

In step 202, the intelligent gateway device finds out SCP1 required to be triggered according to service configuration information, and assembles the InitialDP message according to the service configuration information and sends it to SCP1.

The intelligent gateway device finds out the service configuration information corresponding to the InitialDP message according to the received InitialDP message, so as to find out SCP1 required to be triggered.

In step 203, SCP1 sends the Request Report BCSM Event (RRBE) to the intelligent gateway device according to a preset service logic.

The aforementioned RRBE refers to intelligent network signaling used to request the MSC to report the user's answer or disconnect event.

The preset service logic refers to specific services, such as prepaid services, or virtual private network (VPN) services, etc.

In step 204, SCP1 sends apply charging (AC) information to the intelligent gateway device according to the preset service logic.

In step 205, SCP1 sends Connect information to the intelligent gateway device according to preset service logic.

In step 206, when the intelligent gateway device determines that services of SCP2 are required to be triggered based on the service configuration information, it assembles and sends an InitialDP message to the SCP2.

In step 207, SCP2 sends the RRBE to the intelligent gateway device according to preset service logic.

In step 208, SCP2 sends the apply charging (AC) information to the intelligent gateway device according to the preset service logic.

In step 209, SCP2 sends the Connect information to the intelligent gateway device according to the preset service logic.

In step 210, the intelligent gateway device sends the RRBE to the MSC according to the service configuration information.

In this embodiment, the two RRBEs from SCP1 and SCP2 are combined to send to the MSC.

In step 211, the intelligent gateway device sends the AC information to the MSC according to the service configuration information.

In step 212, the intelligent gateway device sends the Connect information to the MSC according to the service configuration information.

In step 213, the MSC reports an Event Request Broker (ERB) of the answer event to the intelligent gateway device.

In step 214, the intelligent gateway device reports the ERB to SCP1.

In step 215, the intelligent gateway device reports the ERB to SCP2.

In step 216, the MSC reports a request charging report of an Apply Charging Report (ACR) to the intelligent gateway device.

In step 217, the intelligent gateway device reports the ACR to SCP1.

In step 218, the intelligent gateway device reports the ACR to SCP2.

In step 219, the MSC reports an ERB of the disconnect event to the intelligent gateway device.

In step 220, the intelligent gateway device reports the ERB to SCP1.

In step 221, the intelligent gateway device reports the ERB to SCP2.

In step 222, SCP1 sends a Release Call (RC) event to the intelligent gateway device.

In step 223, SCP2 sends a RC event to the intelligent gateway device.

In step 224, the intelligent gateway device sends the RC event to the MSC.

In order to implement the embodiments of the method described above, other embodiments of the present invention also provide an intelligent network and an intelligent gateway device. It should be noted first that since the following embodiments are embodiments for implementing the method described above, all modules in the intelligent gateway device are configured to implement steps of the method described above, but the present invention is not limited to the following embodiments, any intelligent network and intelligent gateway device that can implement the method described above should be covered in the protection scope of the present invention. Moreover, in the following description, the same content as the method described above will be omitted to save space.

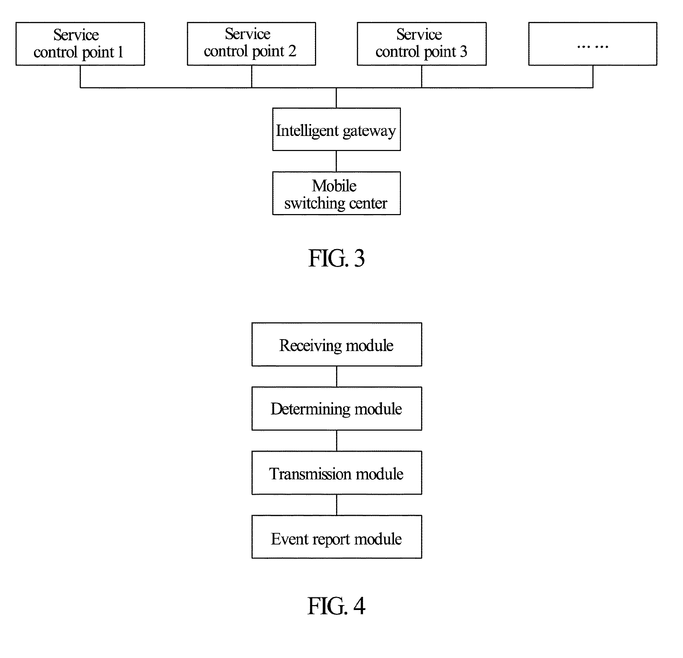

FIG. 3 is a structural diagram of an intelligent network in accordance with an embodiment of the present invention. It can be seen from this figure that the intelligent network comprises at least one mobile switching center, at least one intelligent gateway device, and a plurality of service control points, wherein the mobile switching center is connected to the service control points via the intelligent gateway.

The intelligent gateway device comprises:
a receiving module configured to receive a triggering message for triggering services from the mobile switching center; and
a transmission module configured to send the triggering message to a service control point corresponding to the triggering message, and trigger a service logic of the service control point via the triggering message.

Referring to FIG. 4, a block diagram of an intelligent gateway device in accordance with an embodiment of the present invention is shown. The intelligent gateway device comprises:
a receiving module configured to receive a triggering message for triggering services from a mobile switching center; and
a transmission module configured to send the triggering message to a service control point corresponding to the triggering message, and trigger a service logic of the service control point via the triggering message.

In another embodiment of the present invention, the intelligent gateway device also comprises:
a determining module configured to determine whether the other service control points are required to be triggered based on service configuration information, and if yes, send the triggering message to the other service control points.

In another embodiment of the present invention, the intelligent gateway device also comprises
an event reporting module configured to send an event report received from the mobile switching center to the service control point.

The above description is only preferred embodiments of the present invention, and it should be noted that various improvements and modifications may be made by those skilled in the art without departing from the principle of the present invention. Such improvements and modifications should also be regarded as the protection scope of the present invention.

### Industrial Applicability

In the present invention, a triggering message for triggering services is received from a MSC through an intelligent gateway device, and then the triggering message is sent to a SCP corresponding to the triggering message to trigger a service logic of the SCP via the triggering message so as to resolve the drawback that the service logic of the original SCP must be modified when a new SCP service is added to the existing network. For example, after a user subscribes to an intelligent gateway device in a HLR, he can subscribes to multiple SCP services at the same time in the intelligent gateway device without modifying the service logic of the original SCP, and it is sufficient to newly add corresponding SCP service functions, thereby maintaining greatly the system stability and enriching the user experience.

## Claims

1. A method for triggering multi-services which is applied in an intelligent network, the intelligent network comprising at least one mobile switching center, an intelligent gateway, and a plurality of service control points, wherein the mobile switching center is connected to the service control points by the intelligent gateway, and the intelligent network gateway subscribes to services in the plurality of service control points, and the method comprises:
the intelligent gateway receiving a triggering message for triggering services from the mobile switching center; and
the intelligent gateway sending the triggering message to a service control point corresponding to the triggering message, and triggering a service logic of the service control point via the triggering message.

2. The method according to claim 1, wherein after the step of the intelligent gateway sending the triggering message to the service control point corresponding to the triggering message, the method further comprises:
the intelligent gateway determining whether the other service control points are required to be triggered based on service configuration information, and if yes, sending the triggering message to the other service control points.

3. The method according to claim 1, wherein after the step of the intelligent gateway sending the triggering message to the service control point corresponding to the triggering message, the method further comprises:
the service control point returning a response message to the intelligent gateway;
the intelligent gateway sending the response message returned by the service control point to the mobile switching center, and receiving an event report from the mobile switching center; and
the intelligent gateway sending the event report received from the mobile switching center to the service control point.

4. The method according to claim 2, wherein before the step of the intelligent gateway sending the triggering message to the service control point corresponding to the triggering message, the method further comprises:
the intelligent gateway determining whether number information in the triggering message is required to be modified based on the service configuration information, and if yes, modifying the number information in the triggering message.

5. The method according to claim 4, wherein the service configuration information includes a service trigger list and number change regulation.

6. An intelligent network comprising at least one mobile switching center, at least one intelligent gateway device, and a plurality of service control points, wherein the mobile switching center is connected to the service control points by the intelligent gateway, and the intelligent gateway subscribes to services in the plurality of service control points,
the intelligent gateway device comprises:
a receiving module configured to receive a triggering message for triggering services from the mobile switching center; and
a transmission module configured to send the triggering message to a service control point corresponding to the triggering message, and trigger a service logic of the service control point via the triggering message.

7. The intelligent network according to claim 6, wherein the intelligent gateway device further comprises:
a determining module configured to determine whether the other service control points are required to be triggered based on service configuration information, and if yes, send the triggering message to the other service control points; and
an event reporting module configured to send an event report received from the mobile switching center to the service control point.

8. An intelligent gateway device comprising:
a receiving module configured to receive a triggering message for triggering services from a mobile switching center; and
a transmission module configured to send the triggering message to a service control point corresponding to the triggering message, and trigger a service logic of the service control point

9. The intelligent gateway device according to claim 8, further comprising:
a determining module configured to determine whether there are other service control points required to be triggered based on service configuration information, and if yes, trigger the transmission module to send the triggering message to the other service control points.

10. The intelligent gateway device according to claim 9, further comprising:
an event reporting module configured to send an event report received from the mobile switching center to the service control point.
